# EUROPÄISCHE PATENTSCHRIFT

(11) **EP 0 878 641 B1**
(45) Veröffentlichungstag und Bekanntmachung des Hinweises auf die Patenterteilung: **25.08.2004**
(21) Anmeldenummer: 97107857.1
(22) Anmeldetag: 14.05.1997
(51) Int. Cl.: F16H 15/42

(54) **Kegelreibringgetriebe**
Transmission with cones and friction ring
Transmission avec éléments coniques et anneau de friction

(43) Veröffentlichungstag der Anmeldung: 18.11.1998
(60) Teilanmeldung: 04006674.8
(73) Patentinhaber: Rohs, Ulrich, Dr.-Ing., D-52351 Düren (DE)
(72) Erfinder: Rohs, Ulrich, Dr.-Ing., D-52351 Düren (DE)
(74) Vertreter: Castell, Klaus, Dr.

(56) Entgegenhaltungen:
- EP-A- 0 394 005
- EP-A- 0 657 663
- CH-A- 147 713
- DE-A- 3 835 052
- DE-A- 19 542 726
- DE-B- 1 005 335
- FR-A- 1 144 582
- GB-A- 1 296 827
- US-A- 2 178 859
- US-A- 2 583 790
- US-A- 4 393 964
- US-A- 5 601 509

## Beschreibung

Die Erfindung betrifft ein Kegelreibringgetriebe nach dem Oberbegriff des Patentanspruches 1.

Ein solches Kegelreibringgetriebe ist aus der GB-PS 298 676 bekannt. Bei dieser Ausführung ist parallel zu den Achsen der Kegelreibräder auf einer Führungsachse ein Führungsglied geführt, das den Reibring entlang den Kegelreibrädern zu führen vermag, wodurch eine stufenlose Verstellung des Übersetzungsverhältnisses des Kegelreibringgetriebes ermöglicht wird. Für die Verstellung des Reibringes ist ein besonderer Antrieb erforderlich, der das Getriebe aufwendig macht.

Ein gattungsgemäßes Kegelreibringgetriebe ist aus der DE-A-3835052 bekannt.

Der Erfindung liegt die Aufgabe zugrunde, die Steuerung des Reibringes so zu verbessern, daß das Getriebe möglichst klein gehalten wird, so daß es auch als Fahrzeuggetriebe eingesetzt werden kann.

Die Lösung der Aufgabe besteht in den kennzeichnenden Merkmalen des Anspruches 1.

Weitere vorteilhafte Weiterbildungen der Erfindung sind in den Unteransprüchen angegeben.

Die erfindungsgemäß vorgeschlagene Bauart eignet sich insbesondere für den Einsatz als Fahrzeuggetriebe in Verbindung mit einer Flüssigkeitskupplung und einem Schaltgetriebe für den Fahrtrichtungswechsel sowohl für den Front- als auch für den Heckantrieb.

Nachstehend ist die Erfindung anhand von in der Zeichnung dargestellten Ausführungsbeispielen näher erläutert. Es zeigen:
- Fig.1: einen schematischen Querschnitt durch ein Kegelreibringgetriebe nach der Erfindung nach der Linie I-I in Fig.2,
- Fig.2: eine Draufsicht zu Fig.1
- Fig.3: einen Längsschnitt durch einen Fahrzeugantrieb für einen Frontantrieb mit einem Kegelreibringgetriebe
- Fig.4: eine andere Darstellung der Verstelleinrichtung nach einem Schnitt IV-IV in Fig.3
- Fig.5: eine Einzelheit der Fig.4 im Längsschnitt und
- Fig.6: einen Längsschnitt durch einen Hinterradantrieb für ein Fahrzeug mit einem Kegelreibringgetriebe.

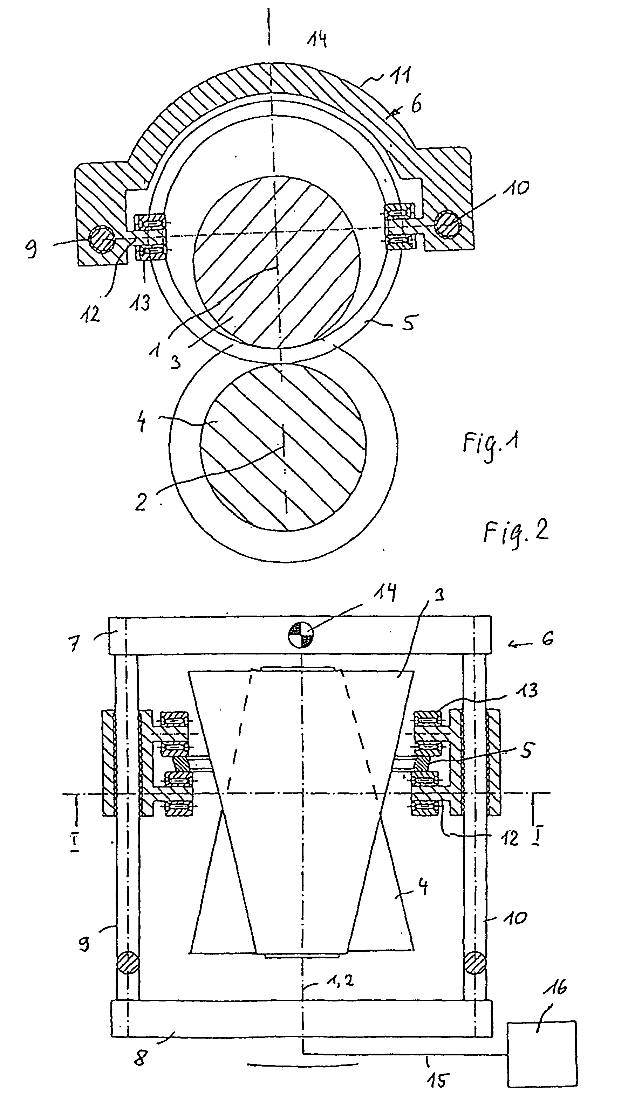

Die Fig.1 und 2 zeigen schematisch ein Reibkegelgetriebe nach der Erfindung.

Es besteht im wesentlichen aus zwei auf parallelen Achsen 1,2 mit radialem Abstand angeordneten Kegelreibrädern 3,4, die zueinander gegensinnig angeordnet sind und gleiche Kegelwinkel β haben. Zwischen den Kegelreibrädern 3,4, ist ein, deren Zwischenraum ausfüllender Reibring 5 angeordnet, der das Kegelreibrad 3 umgibt und in einem Käfig 6 gehalten ist.

Der Käfig 6 besteht aus einem Rahmen, der von zwei Querhäuptern 7,8 und zwei darin aufgenommenen, parallelen Achsen 9,10 gebildet ist. Diese Achsen 9,10 sind parallel zu den Achsen 1,2 und zugleich zu den unter dem Winkel β geneigten Erzeugenden der Reibkegelräder 3,4 angeordnet und tragen eine Verstellbrücke 11 mit zwei aufeinander weisenden Zapfen 12, auf denen jeweils eine Führunsgrolle 13 sitzt. Die Führungsrollen 13 greifen beiderseits des Reibringes 5 an und geben diesem die notwendige axiale Führung.

Die Mitte des Querhauptes 7 bildet eine lotrechte Drehachse 14, um die der gesamte Käfig 6 schwenkbar ist. Zu diesem Zweck ist das untere Querhaupt 8 mit einem daran angreifenden, nicht näher dargestellten Querantrieb 15 und einem Verstellmotor 16 verbunden.

Die Drehachse 14 liegt beim Ausführungsbeispiel in der durch die Drehachsen der Reibkegelräder 3,4 bestimmten Ebene. Sie kann auch in einer hierzu parallelen Ebene liegen oder die erstgenannte Ebene unter einem spitzen Winkel schneiden.

Wird der Käfig 6 um wenige Winkelgrade verschwenkt, so bewirkt der Reibantrieb eine axiale Verstellung der Verstellbrücke 11 und damit eine Änderung des Übersetzungsverhältnisses der Kegelreibräder. Hierzu genügt ein winziger Energieaufwand.

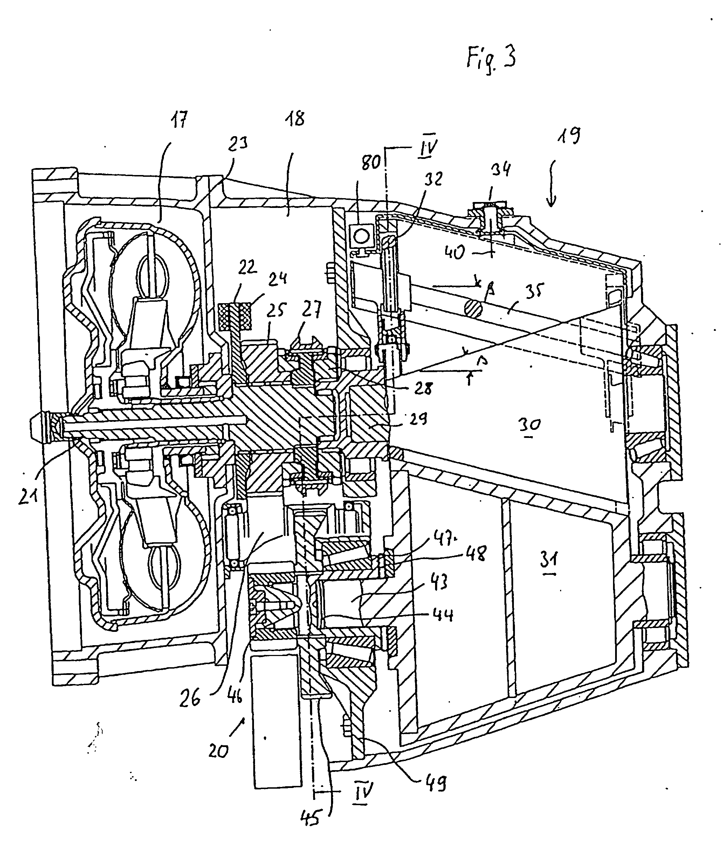

Fig.3 zeigt einen Frontantrieb für ein Fahrzeug mit einem erfindungsgemäßen Kegelreibringgetriebe. Es besteht im wesentlichen aus einem hydraulischen Wandler bzw. einer Flüssigkeitskupplung 17, einem dieser nachgeordneten Schalteinheit 18, einem Kegelreibringgetriebe 19 und einem Abtrieb 20.

Der Abtriebsteil der Flüssigkeitskupplung 17 sitzt auf einer Welle 21, auf der auch eine Bremsscheibe 22 angeordnet ist, die mit im Gehäuse 23 gehaltenen Bremsbacken 24 zusammenwirkt und elektronisch ansteuerbar ist.

Unmittelbar hinter der Bremsscheibe 22 sitzt ein freilaufendes Zahnrad 25, das mit einem nur teilweise dargestellten Vorgelege 26 in Eingriff steht und im Abtrieb 20 den Rückwärtsgang bewirken kann. Das Zahnrad 25 weist auf einer Seite eine Kronenverzahnung auf, mit der es mit einer auf der Welle 21 gehaltenen und axial verschiebbaren, eine innere Axialverzahnung aufweisenden Schaltmuffe 27 in Eingriff gebracht und aktiviert werden kann.

Wird eine Drehrichtungsumkehr gewünscht, so wird zunächst die Bremse 22,24 betätigt, damit das nachfolgende Getriebe nicht von dem Drehmomentenstoß beeinträchtigt wird. Sodann wird die Schaltmuffe 27 in Fig.3 aus ihrer dort gezeigten neutralen Stellung nach rechts bewegt und gelangt mit einem Ritzel 28 in Eingriff, das fest mit der Antriebswelle 29 eines Kegelreibrades 30 des Kegelreibringgetriebes 19 verbunden ist.

Das Kegelreibringgetriebe 19 besteht, wie in den Fig. 1 und 2 beschrieben, aus zwei entgegengesetzt und mit radialem Abstand zueinander angeordneten Kegelreibrädern 30,31 mit gleichem Kegelwinkel β und parallelen Achsen. Ferner ist das obere Kegelreibrad 30 von einem Reibring 32 umschlossen, der mit seiner inneren Mantelfläche mit dem Kegelreibrad 30 und mit seiner äußeren Mantelfläche mit dem Kegelreibrad 31 in Reibeingriff steht.

Die beiden Kegelreibräder 30,31 können, wie dargestellt, unterschiedliche Durchmesser haben, wodurch ggf. eine Übersetzungsstufe beim nachfolgenden Abtrieb 20 eingespart wird.

Aus Gewichtsgründen können die Kegelreibräder 30,31 auch hohl ausgebildet sein, da es lediglich auf ihre Mantelflächen ankommt.

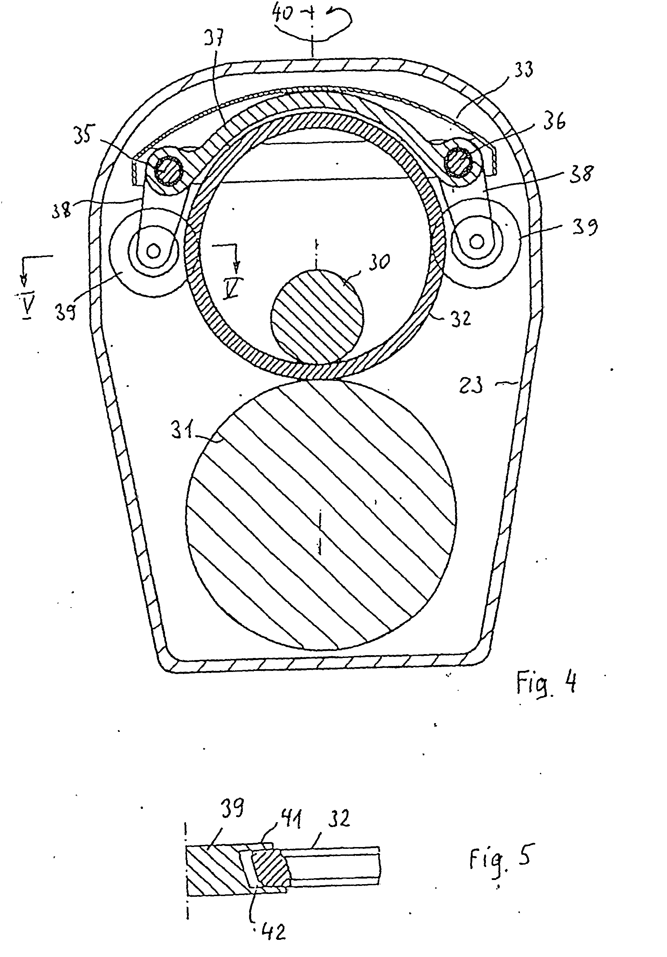

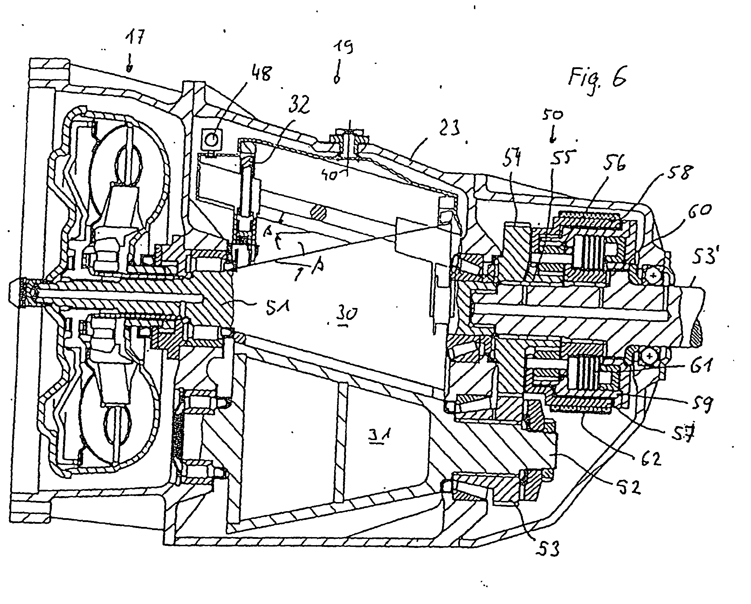

Der Reibring 32 ist, wie auch die Fig.4 und 5 zeigen, in einem Käfig 33 gehalten, der an der Stelle 34 (Fig.3) im Gehäuse um eine Drehachse 40 schwenkbar angeordnet, die in der durch die Drehachsen der Reibkegelräder 30,31 bestimmten Ebene liegt. Um große Schwenkwege zu vermeiden, liegt sie etwa in der Mitte der axialen Länge der Reibkegelräder 30,31. Die Drehachse 40 kann, wie oben erwähnt, auch in einer hierzu parallelen Ebene liegen oder die erstgenannte Ebene unter einem spitzen Winkel schneiden.

Im Käfig sind zwei parallele Achsen 35,36 gehalten, deren Steigungswinkel β zur Waagerechten gleich dem Kegelwinkel β der Kegelreibräder 30,31 ist. Auf diesen Achsen 35,36 ist eine Verstellbrücke 37 geführt, die Ansätze 38 aufweist, an denen Führungsrollen 39 gelagert sind. Diese haben, wie Fig.5 zeigt, eine Umfangsnut 41 und umgreifen mit ihren Flanschen 42 den Reibring 32.

Der Reibring kann, wie dargestellt, mit seiner Achse parallel zu den Achsen der Reibkegelräder 30,31 angeordnet sein. Er kann aber auch so im Käfig gehalten sein, daß seine Achse parallel zur Erzeugenden der einander zugewandten Reibkegelräder 30,31 liegt und senkrecht auf der Mantelfläche der Reibkegelräder steht.

Für die Verstellung des Käfigs 33 ist eine im Gehäuse 23 gelagerte Verstellspindel 80 vorgesehen, die mit einem nicht dargestellten Verstellmotor oder Magnet verbunden ist und am Käfig 33 angreift.

Bei leichter Drehung des Käfigs 33 wird der Reibring 32 um die Achse 40 gedreht, wodurch sich die relative Lage zu den Kegelrädern verändert, so daß der Reibring 32 selbsttätig seine Position verfährt und das Übersetzungsverhältnis des Kegelreibringgetriebes 19 verändert.

Die Abtriebswelle 43 des Kegelreibrades 31 ist in einer Anpreßeinrichtung 44 aufgenommen, die ihrerseits im Gehäuse 23 gelagert ist und trägt Abtriebsritzel 45,46.

Die Anpreßeinrichtung 44 besteht aus einer die Abtriebswelle 43 übergreifenden Verlängerungswelle mit einem dem Kegelreibrad 31 zugewandten Flansch 47 mit einer Radialverzahnung 48, die mit einer entsprechenden Radialverzahnung am Kegelreibrad 31 zusammenwirkt. Die Radialverzahnung 48 bewirkt einen axialen Druck auf das Kegelreibrad 31.

Vorteilhaft ist das Gehäuse 23 zwischen dem An- und Abtrieb 17, 18, 20 einerseits und dem Kegelreibringgetriebe 19 andererseits durch eine Trennwand 49 abgeteilt. Damit ist es möglich, im Gehäuseteil für das Kegelreibringgetriebe 19 eine Kühlflüssigkeit ohne Schmiereigenschaften, z. B. Silikonöl, einlaufen zu lassen, so daß der Reibwert nicht beeinflußt wird. Als Kühlflüssigkeit für das Kegelreibringgetriebe eignen sich auch Traktionsfluide oder Öle mit Keramikpulver oder anderen Feststoffpartikeln.

Vorteilhaft bestehen die Reibflächen mindestens eines Getriebeteiles des Kegelreibringgetriebes, z.B. die Kegelreibräder 30,31 oder der Reibring 32 aus einer Beschichtung aus Hartmetall oder Keramik, z.B. Titannitrid, Titancarbonnitrid, Titan-Aluminiumnitrid oder dgl.

Die Fig.6 zeigt die Anwendung des erfindungsgemäßen Kegelreibringgetriebes bei einem Hinterradantrieb eines Fahrzeuges.

Vor einem Kegelreibringgetriebe 19 befindet sich eine Flüssigkeitskupplung bzw. ein hydraulischer Wandler 17 und hinter dem Kegelreibringgetriebe 19 ein Planetengetriebe 50.

Die Abtriebswelle der Flüssigkeitskupplung 17 bildet zugleich die Welle 51 des oberen Kegelreibrades 30, das über den Reibring 32 ein unteres Kegelreibrad 31 antreibt, auf dessen Abtriebswelle 52 ein Ritzel 53 sitzt, das mit einem frei drehbaren, auf einer Getriebeabtriebswelle 53' sitzenden Zahnrad 54 kämmt. Die Getriebeabtriebswelle 53' fluchtet mit der Welle 51 und ist in dieser frei drehbar aufgenommen.

Ein mit dem Zahnrad 54 einstückig verbundenes Ritzel 55 bildet das Sonnenrad des Planetengetriebes 50. Dieses kämmt mit Planetenzahnrädern 56, die in einem Planetenträger 57 gehalten sind, der um die Getriebeabtriebswelle 53' zu laufen vermag. Der Planetenträger 57 weist einen zylindrischen Ansatz 58 auf, der ein Hohlrad 59 einschließt, das mit den Plantenzahnrädern 56 kämmt und mit der Getriebeabtriebswelle 53' über eine Längsverzahnung 60 fest verbunden ist.

Im Planetengetriebe 50 ist ferner eine Lamellenkupplung 61 vorgesehen, die die Getriebeabtriebswelle 53 mit dem Hohlrad59 verbinden kann. Schließlich ist dem zylindrischen Ansatz 58 des Planetenträgers 54 eine Bremse 62 zugeordnet.

Durch Betätigung der Lamellenkupplung 61 wird der Vorwärtsantrieb eingeschaltet. Wird die Bremse 62 betätigt, wird der Planetenträger 57 festgehalten und es ergibt sich eine Drehrichtungsänderung der Getriebeabtriebswelle 53', d.h. ein Rückwärtsantrieb.

## Patentansprüche

1. Kegelreibringgetriebe mit zwei entgegengesetzt zu einander auf zwei parallelen Wellen angeordneten und umlaufenden Kegelreibrädern mit gleichem Kegelwinkel und einem mit beiden Kegelreibrädern in Eingriff stehenden, das eine Kegelreibrad umfassenden Reibring, der entlang der Erzeugenden beider Kegelreibräder geführt ist, wobei der Reibring (5, 32) in einem Käfig (6, 33) gehalten ist, der an einer Drehachse (14, 40) angelenkt und um diese mittels eines geeigneten Antriebs (16, 48) schwenkbar angeordnet ist, ***dadurch gekennzeichnet*, *dass*** in dem Käfig zwei parallele Achsen (9, 10; 35, 36) gehalten sind, deren Steigungswinkel gleich dem Kegelwinkel der Kegelreibräder (3, 4; 30, 31) ist, und auf diesen Achsen eine Verstellbrücke (11, 37) geführt ist, welche den Reibring (5, 32) führt.

2. Kegelreibringgetriebe nach Anspruch 1, **dadurch gekennzeichnet, daß** die Drehachse (14,40) des Käfigs (6,33) in der durch die Drehachsen der Kegelreibräder (3,4;30,31) bestimmten Ebene liegt.

3. Kegelreibringgetriebe nach Anspruch 1, **dadurch gekennzeichnet, daß** die Drehachse (14,40) des Käfigs (6,33) in einer Ebene liegt, die parallel zur Ebene angeordnet ist, die durch die Drehachsen der Kegelreibräder (3,4;30,31) bestimmt ist.

4. Kegelreibringgetriebe nach Anspruch 1, **dadurch gekennzeichnet, daß** die Drehachse (14,40) des Käfigs (6,33) die durch die Drehachsen der Kegelreibräder (30,31) bestimmte Ebene unter einem spitzen Winkel schneidet.

5. Kegelreibringgetriebe nach einem der Ansprüch 1 bis 4, **dadurch gekennzeichnet, daß** die Kegelreibräder (3,4;30,31) unterschiedliche mittlere Durchmesser aufweisen.

6. Kegelreibringgetriebe nach einem der Ansprüche 1 bis 7, **dadurch gekennzeichnet, daß** die Kegelreibräder (3,4;30,31) hohl ausgeführt sind.

## Claims

1. A gearing of the kind with cones and friction ring having two revolving conical friction wheels of the same cone angle oppositely disposed on parallel shafts and a friction ring engaging the two conical friction wheels and surrounding the one conical friction wheel, said friction ring (5, 32) being guided along the generatrix of the two conical friction wheels and being retained in a cage (6, 33) that is linked to an axis of rotation (14, 40) about which it is disposed so as to be pivotal by means of an appropriate drive (16, 48), ***characterized in that*** two parallel axes (9, 10; 35, 36) are retained in said cage, said axes having a pitch angle that is equal to the cone angle of the conical friction wheels (3, 4; 30, 31) and an adjusting bridge (11, 37) for guiding said friction ring (5, 32) being guided on said axes.

2. The gearing of the kind with cones and friction ring in accordance with claim 1, **characterized in that** the axis of rotation (14, 40) of the cage (6, 33) lies in the plane that is determined by the axes of rotation of the conical friction wheels (3, 4; 30, 31).

3. The gearing of the kind with cones and friction ring in accordance with claim 1, **characterized in that** the axis of rotation (14, 40) of the cage (6, 33) lies in a plane that is parallel to the plane determined by the axes of rotation of the conical friction wheels (3, 4; 30, 31).

4. The gearing of the kind with cones and friction ring in accordance with claim 1, **characterized in that** the axis of rotation (14, 40) of the cage (6, 33) intersects the plane determined by the axes of rotation of the conical friction wheels (30, 31) at an acute angle.

5. The gearing of the kind with cones and friction ring in accordance with any of the claims 1 through 4, **characterized in that** the conical friction wheels (3, 4; 30, 31) have different mean diameters.

6. The gearing of the kind with cones and friction ring in accordance with any of the claims 1 through 5, **characterized in that** the conical friction wheels (3, 4; 30, 31) are configured to be hollow.

## Revendications

1. Variateur à cônes et anneau à friction comportant deux roues coniques à friction tournantes, de même angle au sommet et disposées en regard l'une de l'autre sur deux arbres parallèles et un anneau à friction en prise avec les deux roues coniques à friction et entourant l'une des roues coniques à friction, l'anneau à friction (5, 32) étant guidé le long de la génératrice des deux roues coniques à friction et étant retenu dans une cage (6, 33) articulée sur un axe de rotation (14, 40) sur lequel elle est montée de manière à pouvoir être pivotée au moyen d'un entraînement (16, 48) approprié, ***caractérisé en ce que*** deux axes parallèles (9, 10; 35, 36) dont l'angle d'inclinaison est égal à l'angle au sommet du cône des roues coniques à friction (3, 4; 30, 31) sont retenus dans la cage et qu'un pont d'ajustement (11, 37) guidant l'anneau à friction (5, 32) est guidé sur ces axes.

2. Variateur à cônes et anneau à friction selon la revendication 1, **caractérisé en ce que** l'axe de rotation (14, 40) de la cage (6, 33) se situe dans le plan déterminé par les axes de rotation des roues coniques à friction (3, 4; 30, 31).

3. Variateur à cônes et anneau à friction selon la revendication 1, **caractérisé en ce que** l'axe de rotation (14, 40) de la cage (6, 33) se situe dans un plan qui est parallèle au plan déterminé par les axes de rotation des roues coniques à friction (3, 4; 30, 31).

4. Variateur à cônes et anneau à friction selon la revendication 1, **caractérisé en ce que** l'axe de rotation (14, 40) de la cage (6, 33) coupe le plan déterminé par les axes de rotation des roues coniques à friction (30, 31) à angle aigu.

5. Variateur à cônes et anneau à friction selon l'une quelconque des revendications 1 à 4, **caractérisé en ce que** les roues coniques à friction (3, 4; 30, 31) ont des diamètres moyens différents.

6. Variateur à cônes et anneau à friction selon l'une quelconque des revendications 1 à 5, **caractérisé en ce que** les roues coniques à friction (3, 4; 30, 31) sont creuses.
